**Europäisches Patentamt**

**European Patent Office**

**Office européen des brevets**

(19)

(11) Veröffentlichungsnummer: **0 040 405**
**B1**

(12) **EUROPÄISCHE PATENTSCHRIFT**

(45) Veröffentlichungstag der Patentschrift:
**11.01.84**

(51) Int. Cl.³: **G 01 L 21/24**

(21) Anmeldenummer: **81103706.8**

(22) Anmeldetag: **14.05.81**

(54) Gasreibungsvakuummeter.

(30) Priorität: **21.05.80 DE 3019315**

(43) Veröffentlichungstag der Anmeldung:
**25.11.81 Patentblatt 81/47**

(45) Bekanntmachung des Hinweises auf die Patenterteilung:
**11.01.84 Patentblatt 84/2**

(84) Benannte Vertragsstaaten:
**AT BE CH FR GB IT LI NL SE**

(56) Entgegenhaltungen:
**DE - A - 2 119 838**

**JOURNAL OF SCIENTIFIC INSTRUMENTS, Heft 42, Nr. 2, Februar 1965, London, GB P.J. HARBOUR et al.: "A rotating sphere, absolute vacuum gauge", Seiten 105-108**

(73) Patentinhaber: **Kernforschungsanlage Jülich Gesellschaft mit beschränkter Haftung, Postfach 1913, D-5170 Jülich (DE)**

(72) Erfinder: **Fremerey, Johan K., Dr., Mönkemöllerstrasse 19, D-5300 Bonn 1 (DE)**
Erfinder: **Lindenau, Bernd, Siemensstrasse 6, D-5170 Jülich (DE)**

(74) Vertreter: **Metz, Siegfried, c/o Kernforschungsanlage Jülich GmbH - RPA-PT - Postfach 1913, D-5170 Jülich (DE)**

## Gasreibungsvakuummeter

Die Erfindung bezieht sich auf ein Gasreibungsvakuummeter der im Oberbegriff des Patentanspruches 1 angegebenen Art. Gegenstand der Erfindung ist auch ein Verfahren zur Messung der Makroskopischen Rauhigkeit eines Rotationskörpers für ein Gasreibungsvakuummeter.

Gasreibungsvakuummeter mit Rotationskörpern sind bekannt, vgl. Dushman and Lafferty, »Scientific Foundations of Vacuum Technique«, Wiley, New York, 1962. Gasreibungsvakuummeter werden als Meßinstrumente zur Bestimmung des Drucks insbesondere im Hochvakuumbereich eingesetzt. Als Meßgröße zur Druckbestimmung wird die Abbremsung eines frei rotierenden Rotationskörpers im evakuierten Raum durch auf der Oberfläche des Rotationskörpers auftreffende Gasmoleküle genutzt. Um mechanische Reibungsverluste auszuschließen, lassen sich die Rotationskörper berührungslos, beispielsweise magnetisch, lagern. Als Rotationskörper eignen sich flache Scheiben sowie zylindrische oder kegelförmige Elemente. Bevorzugt werden magnetisch gelagerte Kugeln verwendet. In der Praxis weisen die Rotationskörper polierte Oberflächen auf, die auch als glatt bezeichnet werden. Glatte Rotationskörper gelten als Körper mit einem Gasreibungskoeffizienten, der von der im zu messenden Raum vorhandenen Gasart weitgehend unabhängig ist. Dies ist auf die durch Adsorbate hervorgerufene mikroskopische Rauhigkeit der Oberfläche zurückzuführen, die eine diffuse Streuung der auf der Oberfläche auftreffenden Gasmoleküle bewirkt.

Es hat sich jedoch gezeigt, daß der Gasreibungskoeffizient bei extrem sauberen, adsorbatfreien Oberflächen von Rotationskörpern, wie sie im Ultrahochvakuum anzutreffen sind, erheblich geringere Werte aufweisen kann, vgl. R. G. Lord, »Tangential momentum accomodation coefficients of rare gases on polycrystalline metal surfaces«, Rarefield Gas Dynamics, AIAA, New York, 1977, Seiten 531 ff. Eine solche Verringerung der Gasreibungskoeffizienten tritt immer dann in Erscheinung, wenn die Gasmoleküle an einer makroskopisch glatten Oberfläche des Rotationskörpers bei fehlender mikroskopischer Rauhigkeit »reibungslos« wie an einem Spiegel reflektiert werden. Die Gas-Oberflächen-Wechselwirkung wird unter solchen Bedingungen auch als spiegelnd bezeichnet.

Der Gasreibungskoeffizient des Rotationskörpers wird darüber hinaus von Makroskopischen Oberflächenveränderungen beeinflußt. Beispielsweise führt Rostansatz auf der Oberfläche zu erhöhten Werten des Gasreibungskoeffizienten und zu Meßwertabweichungen, die weit über der mit Instrumenten dieser Art erzielbaren Meßgenaugkeit von 1% liegen.

Aufgabe der Erfindung ist es, einen Rotationskörper zu schaffen, der einen von der Veränderung der mikroskopischen Rauhigkeit weitgehend unabhängigen Gasreibungskoeffizienten aufweist.

Diese Aufgabe wird bei einem Gasreibungsvakuummeter der eingangs erwähnten Art gemäß der Erfindung durch die im Patentanspruch 1 angegebene Ausbildung der Oberfläche des Rotationskörpers gelöst. Es wird eine makroskopische Rauhigkeit der Oberfläche gewählt, die auch bei geringer mikroskopischer Rauhigkeit zu einer diffusen Streuung der Gasmoleküle führt. Der Gasreibungskoeffizient ist daher weitgehend unabhängig von der mikroskopischen Rauhigkeit. In vorteilhafter Weise wirkt sich auch eine Oberflächenkorrosion auf dem Rotationskörper in geringerem Maße aus als bei Rotationskörpern mit polierter Oberfläche.

Ein Verfahren zur Messung der makroskopischen Rauhigkeit eines Rotationskörpers ist in Patentanspruch 2 angegeben.

Die Erfindung wird nachfolgend anhand eines in der Zeichnung schematisch wiedergegebenen Ausführungsbeispiels näher erläutert. Es zeigen im einzelnen:

Fig. 1 Gasreibungsvakuummeter mit einer magnetisch gelagerten Kugel als Rotationskörper;

Fig. 2 Abhängigkeit des relativen Gasreibungskoeffizienten von makroskopischer Rauhigkeit bei diffuser Streuung und spiegelnder Reflexion.

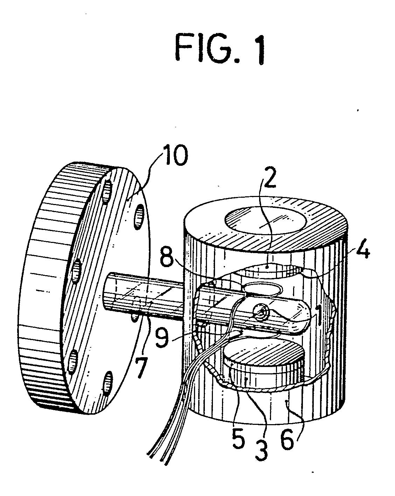

Wie aus Fig. 1 ersichtlich ist, wird beim Gasreibungsvakuummeter im Ausführungsbeispiel als Rotationskörper im Meßkopf eine Kugel 1 verwendet, die zwischen in gleicher Richtung magnetisierten Permanentmagneten 2, 3 freischwebend gelagert ist. Im Ausführungsbeispiel sind auf den Permanentmagneten Polplatten 4, 5 angebracht, die vorzugsweise aus Eisen bestehen. Der magnetische Rückschluß erfolgt über ein vorzugsweise aus Eisen gefertigtes und den Meßkopf nach außen abschließendes Gehäuse 6. Die Kugel 1 ist in einer zum evakuierten Raum hin offenen Meßkammer 7 eingesetzt. Die Wände der Kammer bestehen aus nichtmagnetischem Werkstoff, beispielsweise aus Edelstahl oder Glas.

Zwischen der Meßkammer 7 und den Polplatten 4, 5 sind zwei Steuerspulen 8, 9 eingesetzt, die mit einem in Fig. 1 nicht gesondert dargestellten Regler in Verbindung stehen, der je nach Abweichung der Kugel 1 aus ihrer Gleichgewichtslage einen Steuerstrom mit rückstellender Wirkung erzeugt. Ein magnetisches Lager dieser Art ist aus DE-C-2 444 099 bekannt.

Die Meßkammer 7 ist gasdicht mit einem Flansch 10 verbunden, mit dem das Gasreibungsvakuummeter an einem Rezipienten anschließbar ist.

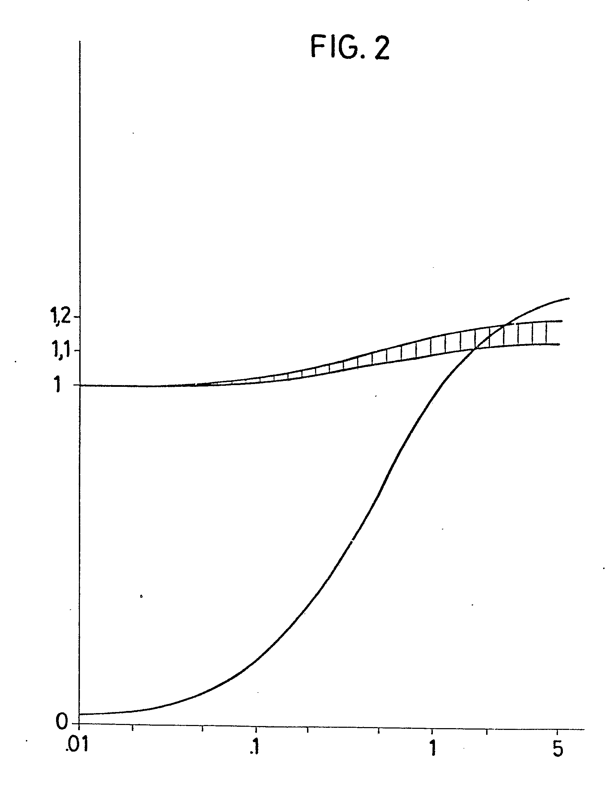

In Fig. 2 ist der theoretische Verlauf des relativen Gasreibungskoeffizienten in Abhängigkeit von der makroskopischen Rauhigkeit der Oberfläche von Rotationskörpern wiedergegeben. Im Diagramm nach Fig. 2 sind auf der Ordinate Werte für den Gasreibungskoeffizienten aufgetragen, die bezogen sind auf den Gasreibungskoeffizienten einer glatten Oberfläche bei maximaler mikroskopischer Rauhigkeit. Für eine Oberfläche der zuletzt genannten Art ist der Gasreibungskoeffizient im Diagramm daher gleich 1. Auf der Abszisse des Diagramms sind Werte für die makroskopische Rauhigkeit der Oberfläche in logarithmischem Maßstab angegeben. Eine makroskopische Rauhigkeit von 1 ist definiert als die Rauhigkeit einer Oberfläche, die aus einer Vielzahl von unter einem Winkel von 45 Grad schräggestellten, ebenen Flächenelementen besteht.

Vom Wert 1 des relativen Gasreibungskoeffizienten ausgehend ist die Veränderung des Gasreibungskoeffizienten mit zunehmender makroskopischer Rauhigkeit bei diffuser Streuung gezeigt. Darüberhinaus ist der Verlauf des relativen Gasreibungskoeffizienten bei spiegelnder Reflexion dargestellt. Die geringste Abhängigkeit des relativen Gasreibungskoeffizienten von der mikroskopischen Oberflächenrauhigkeit ergibt sich dort, wo sich die Kurven für diffuse Streuung und spiegelnde Reflexion überschneiden. Dies ist der Fall bei einer makroskopischen Rauhigkeit der Oberfläche, bei der der relative Gasreibungskoeffizient Werte im Bereich zwischen 1,1 und 1,2 annimmt. Vom Wert 1,1 an nimmt der relative Gasreibungskoeffizient nur noch wenig zu.

Rotationskörper der erfindungsgemäßen Art lassen sich beispielsweise wie folgt herstellen:

Aus einem Vorrat von handelsüblichen, magnetisierbaren Kugellagerkugeln werden einzelne oder mehrere zusammen in eine mit Schleifpapier ausgekleidete Kammer gebracht, in der sie geschleudert werden. Nach einiger Zeit wird die Oberfläche der ursprünglich glänzenden Kugeln matt. Der Schleifvorgang wird dann unterbrochen und der Rauhigkeitsgrad der Kugeln ermittelt.

Die Rauhigkeit einer Kugel läßt sich durch Vergleich des Gasreibungskoeffizienten einer noch unbehandelten glatten Kugel mit dem Gasreibungskoeffizienten der durch Schleifen aufgerauhten Kugel feststellen. Zu diesem Zweck werden zwei Gasreibungsvakuummeter, wie sie in Fig. 1 gezeigt sind, mit jeweils einer der beiden Kugeln an einem gemeinsamen Rezipienten angeschlossen. Vor Beginn der Vergleichsmessung wird die Oberfläche der zu vermessenden aufgerauhten Kugel von Adsorbaten gereinigt, beispielsweise durch Erhitzen der Kugel in Wasserstoff. Anschließend wird der Rezipient mit Intertgas, vorzugsweise mit Argon bis zu einem Druck von ca. $10^{-4}$ mbar aufgefüllt. Dann werden die Kugeln mittels eines in der Zeichnung nicht gesondert dargestellten Rotationsantriebes auf ihre Anfangsdrehzahl von beispielsweise 400 Hertz gebracht. Nach Abschalten des Antriebs wird die Abbremsung der freirotierenden Kugeln verglichen. Der erzeugte Rauhigkeitsgrad der aufgerauhten Kugel läßt sich anhand des in Fig. 2 gezeigten Diagramms feststellen.

Durch Wiederholung des vorbeschriebenen Schleif- und Meßvorgangs wird die zur Erzielung der optimalen Rauhigkeit erforderliche Schleifdauer und -intensität ermittelt. Der Grad der makroskopischen Rauhigkeit kann auf diese Art und Weise reproduzierbar eingestellt werden.

**Patentansprüche**

1. Gasreibungsvakuummeter mit einem Meßkopf, in dem eine mit dem zu überwachenden Vakuum verbindbare Meßkammer (7) vorgesehen ist, mit einem in der Meßkammer drehbar gelagerten und in eine freie Rotation versetzbaren Rotationskörper (1), dessen Oberflächenbeschaffenheit den Gasreibungskoeffizienten beeinflußt, sowie mit Einrichtungen zur Messung der Abbremsung der freien Rotation durch auf die Oberfläche des Rotationskörpers auftreffende Gasmoleküle, dadurch gekennzeichnet, daß die Oberfläche des Rotationskörpers (1) mit einer solchen makroskopischen, d. h. von der Formgebung der Oberfläche bestimmten Rauhigkeit versehen ist, daß die Abhängigkeit des Gasreibungskoeffizienten von der mikroskopischen, d. h. durch Adsorbate bestimmten Rauhigkeit der Oberfläche minimal wird.

2. Verfahren zur Messung der makroskopischen Rauhigkeit eines Rotationskörpers für ein Gasreibungsvakuummeter gemäß Anspruch 1, dadurch gekennzeichnet, daß an einen gemeinsamen Rezipienten zwei Gasreibungsvakuummeter angeschlossen werden, von denen eines als Rotationskörper den zu untersuchenden Rotationskörper und das andere einen Rotationskörper mit glatter, d. h. polierter Oberfläche, enthält, und daß die Rauhigkeit durch Vergleich der Abbremsung der beiden Rotationskörper ermittelt

**Claims**

1. Gas friction vacuum meter with a measuring head in which there is provided a measuring chamber (7) connectable with the vacuum being monitored, with a body of revolution (1) mounted rotatably in the measuring chamber and capable of being rotated freely, the surface condition of said body influencing the gas friction coefficient, also with means for measurung the braking of the free rotation by gas molecules impinging on the surface of the body of revolution, characterised in that the surface of the body of revolution (1) is provided with such a macroscopic roughnes i.e. a roughness determined by the forming of the surface, that the dependence of the gas friction coefficient on the microscopic surface roughness i. e. the roughness due to adsorbates, is minimal.

2. Method for measuring the macroscoping roughness of a body of revolution for a gas friction vacuum meter according to claim 1, characterised in that two gas friction vacuum meters are connected to a common container, one of which meters contains as the body of revolution the body of revolution to be examined and the other a body of revolution with a smooth i. e. polished surface, and that the roughness is ascertained by comparision of the braking of the two bodies of revolution.

## Revendications

1. Vacuomètre à friction de gaz comprenant une tête de mesure, dans laquelle est prévue une chambre de mesure (7) pouvant communiquer avec le vide à surveiller, un corps de révolution (1), monté de maniére à pouvoir tourner dans la chambre de mesure et à pouvoir se déplacer librement en rotation et dont l'état de surface influe sur le coefficient de friction du gaz, ainsi que des dispositifs de mesure du freinage de la libre rotation par de molécules gazeuses rencontrant la surface du corps de révolution, caractérisé en ce que la surface du sorps de révolution (1) a une rugosité macroscopique, c'est-à-dire déterminée par le façonnage de la surface, telle que le coefficient de friction du gaz dépend au minimum de la rugosité microscopique de la surface, c'est-à-dire de la rugo sité déterminée par le produit adsorbé.

2. Procédé de mesure de la rugosité macroscopique d'un corps de révolution pour un vacuomètre à friction de gaz suivant la revendication 1, caractérisé en ce qu'il consiste à raccorder à un récipient commun deux vacuomètres à friction de gaz, dont l'un contient, comme corps de révolution, le corps de révolution à étudier, et l'autre un corps de révolution ayant une surface lisse, c'est-à-dire polie, et à déterminer la rugosité par comparaison du freinage de deux corps de révolution.

FIG. 1

0 040 405

FIG. 2